# FASCICULE DE BREVET EUROPEEN

(11) **EP 0 508 884 B1**
(45) Date de publication et mention de la délivrance du brevet: **02.01.1997**
(21) Numéro de dépôt: 92400967.3
(22) Date de dépôt: 07.04.1992
(51) Int. Cl.: G02B 6/44

(54) **Raccordement de câbles à fibres optiques**
Verbinder für optische Faserkabel
Optical fibre cable connector

(30) Priorité: 10.04.1991 FR 9104350
(43) Date de publication de la demande: 14.10.1992
(73) Titulaire: SAT (Société Anonyme de Télécommunications), 75116 Paris (FR)
(72) Inventeur: Arette-Hourquet, Damien, F-77130 Cannes-Ecluse (FR); Grelin, Etienne, F-89720 Villeblevin (FR); Pavot, Olivier, F-77480 Bray sur Seine (FR)
(74) Mandataire: Fruchard, Guy

(56) Documents cités:
- EP-A- 0 389 206
- FR-A- 2 564 989
- US-A- 4 991 928

## Description

La présente invention concerne un raccordement de câbles à fibres optiques. On entend par câbles à fibres optiques non seulement les câbles contenant uniquement des fibres optiques, mais également les câbles mixtes comportant à la fois des fibres optiques et des conducteurs de transport d'énergie.

On sait que lors d'un raccordement de câbles à fibres optiques il est nécessaire de disposer au moment du raccordement d'un mou suffisant sur les fibres optiques pour réaliser une jonction de celles-ci sans les soumettre à des contraintes qui provoqueraient une détérioration de leurs caractéristiques de transmission.

Lorsque les câbles à raccorder sont associés à des coffrets de raccordement, on prévoit donc à l'intérieur des coffrets de dénuder une longueur suffisante de fibre optique pour disposer du mou nécessaire au moment du raccordement.

Le document FR-A-2.564.989 décrit à ce propos un dispositif de raccordement dans lequel, après le raccordement, les fibres optiques nues sont lovées dans le coffret pour absorber le mou ayant permis d'exécuter la jonction. Ce document prévoit la possibilité de faire varier le point d'ancrage des organes porteurs du câble afin d'augmenter la longueur de fibre disponible lors du raccordement mais il est toujours prévu d'effectuer un lovage des fibres à l'intérieur du boîtier. Ce lovage demande un espace relativement important puisque les fibres optiques ne doivent pas être courbées au-delà d'une courbure minimale de sorte que les coffrets doivent avoir des dimensions importantes par rapport à celles qui seraient strictement nécessaires pour contenir le raccordement. Or il est bien connu que la place disponible est particulièrement réduite pour les liaisons de câbles à fibres optiques qui sont très souvent utilisés comme câbles de télécommunication.

Un but de la présente invention est de proposer un raccordement de câbles à fibres optiques ayant un encombrement réduit sans soumettre les fibres optiques à des contraintes anormales.

En vue de la réalisation de ce but, on propose selon l'invention un raccordement de câbles à fibres optiques selon les revendications 1 et 3.

Ainsi, on règle à volonté le mou qui est donné aux fibres optiques en rapprochant plus ou moins les câble et en les maintenant dans la position choisie. En particulier, au moment du raccordement, les extrémités de câbles sont maintenues très rapprochées afin de procurer un maximum de mou des fibres optiques tandis qu'après raccordement les extrémités de câbles sont écartées pour absorber le mou des fibres optiques et permettre ainsi leur logement dans un organe de protection présentant une faible section transversalement à son axe longitudinal.

Selon une version avantageuse de l'invention, l'organe de protection est un tube cylindrique. Ainsi, après réalisation des épissures sur les fibres optiques, le raccordement est très aisément protégé par coulissement du tube au-dessus du raccordement.

D'autres caractéristiques et avantages de l'invention apparaîtront encore à la lecture de la description qui suit de deux modes de réalisation particuliers non limitatifs de l'invention en liaison avec les dessins ci-joints parmi lesquels :
- la figure 1 est une vue en perspective partiellement écorchée d'un premier mode de réalisation de raccordement selon l'invention,
- la figure 2 est une vue en perspective partiellement écorchée d'un second mode de réalisation de raccordement selon l'invention.

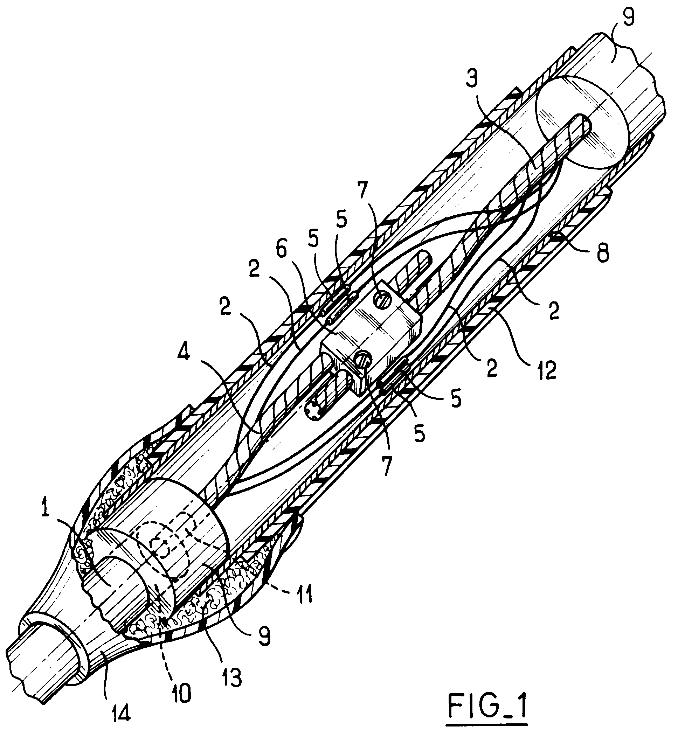

En référence à la figure 1, le premier mode de réalisation de l'invention est décrit en relation avec des câbles à fibres optiques 1 comportant des fibres optiques 2 qui sont supportées par un jonc central 3 comportant des rainures hélicoïdales 4.

Les joncs rainurés 3 sont dégagés sur la longueur qui est nécessaire pour sortir les fibres optiques 2 et réaliser sur celles-ci des épissures 5 ou un raccordement par tout autre moyen. La position relative des extrémités des câbles 1 est obtenue en faisant coulisser les joncs rainurés 3, qui font ici fonction d'organes de positionnement, dans un organe de verrouillage 6.

Dans le mode de réalisation illustré, l'organe de verrouillage 6 est un bloc parallélépipédique traversé par deux trous parallèles destinés à recevoir les joncs rainurés 3 qui sont maintenus dans la position relative choisie par des vis de verrouillage 7 s'étendant transversalement aux trous recevant les joncs rainurés.

Lorsque l'on souhaite réaliser les épissures 5, les fibres optiques 2 doivent avoir un mou suffisant pour permettre de manipuler les fibres optiques sans les soumettre à des rayons de courbure trop faibles qui compromettraient leur caractéristique de transmission ainsi que leur durée de vie. Pour cela, on fait coulisser les joncs rainurés 3 dans le bloc de verrouillage 6 dans le sens d'un rapprochement des extrémités des câbles 1 jusqu'à ce que le mou nécessaire soit obtenu sur les fibres optiques 2. Les vis de verrouillage 7 sont alors serrées sur les joncs rainurés 3 qui maintiennent les câbles dans la position relative choisie. Après que les épissures 5 aient été effectuées, les vis 7 sont à nouveau desserrées et les extrémités des câbles sont écartées pour diminuer le mou des fibres optiques 2 jusqu'à une valeur suffisante pour permettre une manipulation du raccordement ou des dilatations et des contractions de celui-ci par suite de variations de la température ambiante sans que des contraintes mécaniques anormales soient appliquées aux fibres optiques. Les vis de verrouillage 7 sont à nouveau serrées et l'ensemble est alors recouvert avec un organe de protection. Dans le mode de réalisation de la figure 1, l'organe de protection est un tube cylindrique 8 qui a été disposé sur l'un des câbles préalablement à la réalisation du raccordement et qui est mis en place par coulissement. Le tube cylindrique 4 est de préférence centré par des manchons cylindriques 9 qui ont également été mis en place préalablement au raccordement. Les manchons cylindriques 9 ont une surface externe ayant un diamètre sensiblement égal au diamètre interne du tube de protection 8 et comportent un alésage cylindrique 10 ayant un diamètre sensiblement égal au diamètre externe du câble 1 et un alésage 11 permettant le passage du jonc rainuré 3. Après mise en place du tube cylindrique 8, qui est par exemple un tube métallique pour supporter les contraintes mécaniques auxquelles le raccordement pourrait être soumis, ce tube de protection est de préférence recouvert de divers éléments permettant d'assurer une étanchéité du raccordement.

Dans le mode de réalisation illustré, l'étanchéité est obtenue en recouvrant le tube de protection 8 sur une partie de sa longueur par un manchon thermorétractable 12 puis en recouvrant l'extrémité du manchon thermorétractable 12, l'extrémité du tube de protection 8, l'extrémité du manchon de centrage 9 et une partie de la gaine externe du câble 1 avec un mastic autoamalgamant 13 lui-même maintenu en place par un manchon thermorétractable 14 le recouvrant. Bien qu'une seule extrémité du raccordement ait été représentée en détail sur la figure 1, les deux extrémités sont de préférence recouvertes de façon similaire.

On remarquera qu'une fois le raccordement réalisé, les fibres optiques 2 s'étendent à l'intérieur du tube de protection 8 de façon adjacente à l'axe longitudinal des câbles de sorte que l'encombrement global du raccordement est assez faible. Lorsque les extrémités de câbles sont écartées pour supprimer le mou des fibres optiques 2, ce mou est en réalité reporté sur les parties de câbles qui sont adjacentes au raccordement et s'étendent à l'extérieur du tube de protection 8. De part et d'autre du raccordement, les câbles comportent donc des ondulations en forme de lyre ou en forme de serpentin. Ces ondulations ne sont pas gênantes puisqu'elles peuvent généralement prendre place dans la chambre de jonctions et dans les caniveaux ou les conduits dans lesquels les câbles sont installés. En outre, ces ondulations sont réalisées sur des parties de câbles dans lesquelles les fibres optiques sont convenablement supportées et ne risquent donc pas d'être endommagées lors de la formation des ondulations.

Dans le cas d'une nouvelle intervention sur le raccordement, les organes d'étanchéité et de protection sont retirés soit par coulissement soit par découpage et les extrémités des câbles peuvent à nouveau être rapprochées pour donner à nouveau le mou nécessaire aux fibres optiques 2 afin d'intervenir sur celles-ci.

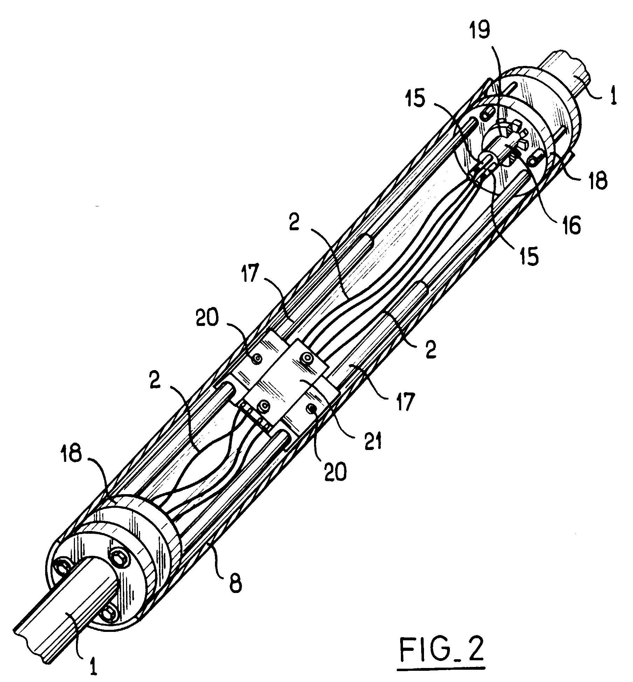

Dans le cas de la figure 2, les câbles raccordés sont des câbles à tube, c'est-à-dire que les fibres optiques 2 sont disposés dans des tubes support 15 eux-mêmes disposés dans un tube de protection 16. Dans ce mode de réalisation, il est difficile d'utiliser les tubes supports 15 et a fortiori le tube de protection 16 comme organe de positionnement puisque ces tubes ne permettent pas un accès latéral aux fibres optiques 2 contrairement aux joncs rainurés dont les rainures sont portées par la périphérie du jonc. Dans ce mode de réalisation, les organes de positionnement sont donc réalisés par des tiges télescopiques 17 fixées aux extrémités des câbles 1 par des flasques 18 eux-mêmes maintenus solidaires des câbles 1 par tout moyen approprié tel que des emmanchements coniques 19. Les tiges télescopiques 17 sont maintenues verrouillées dans la position relative choisie par des vis de verrouillage 20. Dans ce mode de réalisation, les épissures des fibres optiques 2 sont contenues dans un boîtier 21 disposé dans l'axe des câbles.

De la même façon que précédemment, un tube de protection 8 est disposé autour de l'ensemble. Il est supporté à ses extrémités par les flasques 18, et peut, comme dans l'exemple de la figure 1, être recouvert par des éléments d'étanchéité.

Bien entendu l'invention n'est pas limitée aux modes de réalisation décrits et on peut y apporter des variantes sans sortir du cadre de l'invention. En particulier, bien que l'invention ait été décrite en liaison avec des câbles ne comportant que des fibres optiques, on peut réaliser l'invention avec des câbles mixtes en particulier des câbles de terre ou des câbles de garde dans lesquels un câble à fibres optiques est entouré par des conducteurs de transport d'énergie. Le raccordement des conducteurs d'énergie peut être assuré par tout moyen connu. Il peut également être assuré en utilisant certains éléments du raccordement selon l'invention, par exemple en utilisant le tube de protection métallique 8 pour assurer la continuité électrique entre les conducteurs d'énergie qui sont alors dénudés et convenablement repliés pour venir au contact du tube de protection 8. Bien que l'organe de protection ait été décrit sous forme d'un organe tubulaire, on peut utiliser d'autres organes de protection, en particulier des boîtiers de protection allongés comportant plusieurs parties vissées ou boulonnées et ayant des dimensions faibles transversalement à l'axe longitudinal du boîtier.

Dans le cas où l'on utilise des organes de positionnement rapportés comme illustré par la figure 2, on peut prévoir d'utiliser ces organes de positionnement selon un montage analogue à celui de la figure 1, c'est-à-dire en fixant seulement une extrémité de chacun des organes support à une extrémité d'un câble et en prévoyant un organe de verrouillage intermédiaire dans lequel les organes de positionnement peuvent coulisser et être verrouillés dans la position choisie.

Bien que dans les exemples illustrés les raccordements de fibres optiques aient été représentés au niveau des organes de verrouillage, ces raccordements peuvent être décalés des organes de verrouillage pour permettre une manipulation plus aisée.

## Revendications

1. Raccordement pour des câbles à fibres optiques comportant des organes porteurs centraux (3), le raccordement comportant des moyens de verrouillage (6, 7) pour assurer un maintien des câbles selon une position relative choisie, des organes de raccordement (5) des fibres optiques et au moins un organe de protection allongé (8) entourant les organes de verrouillage et les organes de raccordement des fibres optiques, caractérisé en ce que les moyens de verrouillage (6, 7) sont disposés pour associer les organes porteurs centraux (3) entre eux selon une direction sensiblement longitudinale de ceux-ci et pour régler la position relative des câbles raccordés.

2. Raccordement selon la revendication 1, caractérisé en ce qu'il comprend des manchons de centrage cylindriques (9) traversés par les organes porteurs centraux (3) et ayant une surface extérieure sur laquelle l'organe de protection (8) est engagé.

3. Raccordement pour des câbles à fibres optiques comportant des tubes (15) contenant de fibres optiques (2), le raccordement comportant des moyens de verrouillage (20) pour assurer un maintien des câbles selon une position relative choisie, des organes de raccordement (21) des fibres optiques, et au moins un organe de protection allongé (8) entourant les organes de verrouillage et les organes de raccordement des fibres optiques, caractérisé en ce qu'il comporte des tiges de positionnement (17) s'étendant selon une direction sensiblement longitudinale de l'organe de protection et ayant au moins une extrémité fixée à un câble et au moins une partie engagée dans les moyens de verrouillage (20) qui sont disposés pour associer les tiges de positionnement (17) entre elles selon une direction sensiblement longitudinale de celles-ci et pour régler la position relative des câbles raccordés.

4. Raccordement selon la revendication 3, caractérisé en ce que les tiges (17) sont télescopiques et ont leurs extrémités fixées à chacun des câbles (1).

5. Raccordement selon l'une des revendications 1 à 4, caractérisé en ce que l'organe de protection (8) est un tube cylindrique.

## Patentansprüche

1. Verbindungsvorrichtung für zentrale Trägerelemente (3) enthaltende Lichtleitfaserkabel, mit Verriegelungsmitteln (6, 7), die die Kabel relativ zueinander in einer gewünschten Lage halten, Mitteln (5) zum Verbinden der Lichtleitfasern, und mindestens einem länglichen Schutzelement (8), das die Verriegelungselemente und die Elemente zum Verbinden der Lichtleitfasern umschließt, dadurch **gekennzeichnet**, daß die Verriegelungsmittel (6, 7) dazu ausgebildet sind, die zentralen Trägerelemente (3) im wesentlichen in Längsrichtung derselben miteinander zu verbinden und die Lage der miteinander verbundenen Kabel relativ zueinander einzustellen.

2. Verbindungsvorrichtung nach Anspruch 1, dadurch **gekennzeichnet**, daß sie zylindrische Zentriermuffen (9) enthält, durch die die zentralen Trägerelemente (3) hindurchlaufen und die eine Außenfläche haben, mit der das Schutzelement (8) in Eingriff steht.

3. Verbindungsvorrichtung für Lichtleitfaserkabel, die Schläuche (15) haben, die die Lichtleitfasern (2) enthalten, wobei die Verbindungsvorrichtung enthält: Verriegelungsmittel (20), die die Kabel relativ zueinander in einer gewünschten Lage halten, Mittel (21) zum Verbinden der Lichtleitfasern, und mindestens ein längliches Schutzelement (8), das die Verriegelungselemente und die Elemente zum Verbinden der Lichtleitfasern umschließt, dadurch **gekennzeichnet**, daß die Verbindungsvorrichtung Positionierungsstifte (17) hat, die sich im wesentlichen in Längsrichtung des Schutzelementes erstrecken und mit mindestens einem Ende mit einem Kabel verbunden sind und mit mindestens einem Abschnitt mit den Verriegelungsmitteln (20) in Eingriff stehen, wobei die Verriegelungsmittel dazu ausgebildet sind, die Positionierungsstifte (17) im wesentlichen in Längsrichtung derselben miteinander zu verbinden und die Lage der miteinander verbundenen Kabel relativ zueinander einzustellen.

4. Verbindungsvorrichtung nach Anspruch 3, dadurch **gekennzeichnet**, daß die Stifte (17) teleskopartig ausziehbar und ihre Enden jeweils mit einem Kabel (1) verbunden sind.

5. Verbindungsvorrichtung nach einem der Ansprüche 1 bis 4, dadurch **gekennzeichnet**, daß das Schutzelement (8) ein zylindrisches Rohr ist.

## Claims

1. A connector for optical fibre cables comprising central carrier members (3), the connector comprising locking means (6, 7) for ensuring that the cables are held in a selected relative position, members (5) for connection of the optical fibres, and at least one elongate protection member (8) surrounding the locking members and the optical fibre connection members, characterised in that the locking members (6, 7) are arranged to associate the central carrier members (3) together in a substantially longitudinal direction thereof and to regulate the relative position of the connected cables.

2. A connector according to claim 1 characterised in that it comprises cylindrical centering sleeves (9) through which the central carrier members (3) pass and which have an external surface on which the protection member (8) is engaged.

3. A connector for optical fibre cables comprising tubes (15) containing optical fibres (2), the connector comprising locking means (20) to ensure that the cables are held in a selected relative position, members (21) for connection of the optical fibres, and at least one elongate protection member (8) surrounding the locking members and the optical fibre connection members, characterised in that it comprises positioning rods (17) which extend in a substantially longitudinal direction of the protection member and which have at least one end fixed to a cable and at least one part engaged in the locking means (20) which are arranged to associate the positioning rods (17) with each other in a substantially longitudinal direction thereof and to regulate the relative position of the connected cables.

4. A connector according to claim 3 characterised in that the rods (17) are telescopic and have their ends fixed to each of the cables (1).

5. A connector according to one of claims 1 to 4 characterised in that the protection member (8) is a cylindrical tube.
